# FASCICULE DE BREVET EUROPEEN

(11) **EP 1 762 541 B1**
(45) Date de publication et mention de la délivrance du brevet: **05.01.2011**
(21) Numéro de dépôt: 06291185.4
(22) Date de dépôt: 21.07.2006
(51) Int. Cl.: B67D 7/34, F16L 25/01

(54) **Système pour détecter l'état d'une connexion entre un embout tubulaire rigide et une connectique de raccordement étanche d'une extrémité d'un tuyau sur cet embout**
System zur Überprüfung der Verbindung von Verbindungsstücken
System for detecting pipe connection

(30) Priorité: 01.09.2005 FR 0508967
(43) Date de publication de la demande: 14.03.2007
(73) Titulaire: HUTCHINSON S.A., 75008 Paris (FR)
(72) Inventeur: Sinault, Yann, 72000 Le Mans (FR); Godeau, Denis, 45260 Vielles Maisons (FR)
(74) Mandataire: Bolinches, Michel Jean-Marie

(56) Documents cités:
- WO-A-2005/078330
- US-A- 5 605 182

## Description

L'invention concerne un système pour détecter l'état d'une connexion entre un embout tubulaire rigide et une connectique de raccordement étanche d'une extrémité d'un tuyau sur cet embout.

Une connectique dite rapide a pour but de raccorder l'extrémité d'un tuyau sur un embout rigide d'une manière étanche, rapide, précise et fiable. Cette opération doit être réalisée en quelques secondes, et un opérateur doit pouvoir vérifier qu'une bonne connexion s'est établie entre le tuyau et l'embout pour éviter ensuite toute fuite possible du fluide véhiculé par le tuyau au niveau de la connectique de raccordement. D'une manière générale, un bruit caractéristique est émis au moment où s'établit la connexion, et l'opérateur peut en déduire si l'opération s'est bien effectuée ou non, mais ce constat n'est pas nécessairement suffisant en soi.

Pour ces raisons, il est connu d'équiper la connectique avec un témoin visuel dont l'état prouve à l'opérateur qu'une bonne liaison a été établie en plus du bruit caractéristique émis lors de la connexion, ce qui permet d'assurer un double contrôle, mais rien ne permet de certifier que l'opérateur a bien effectué ce double contrôle. Cependant, dans certains cas, le témoin visuel est constitué par une bague par exemple qui sort de son logement lorsqu'une bonne connexion s'est établie, l'opérateur devant normalement récupérer cette bague, ce qui force l'opérateur à effectuer ce contrôle.

Par ailleurs, dans le domaine automobile, il s'avère que les constructeurs ont chacun leurs propres exigences sur la vérification de la bonne connexion de la connectique entre un tuyau et un embout, si bien qu'aucune solution technique à ce problème ne fait l'unanimité.

Le document US-A-5 605 182 divulgue un système de détection qui, dans le cas d'une pompe à essence, détecte le positionnement du pistolet par rapport à l'ouverture du réservoir d'un véhicule automobile, et qui ne comprend que deux éléments, à savoir :
- une unité de contrôle placée dans la pompe et qui est électriquement reliée à une antenne montée dans le pistolet, et
- un transpondeur associé à une antenne, qui est placé dans l'ouverture du réservoir et qui est interrogé par l'unité de contrôle pour connaître son état, lequel est fonction de la distance séparant le pistolet de l'ouverture du réservoir.

Le document WO-A-2005/078330 divulgue un système de détection où un transpondeur, associé à une antenne, est relié à deux contacts électriques fixes qui sont supportés par l'un des éléments du raccord et qui doivent se trouver en regard de deux contacts électriques complémentaires supportés par un cavalier, porté par l'autre des éléments du raccord, lorsqu'une bonne connexion est faite entre les deux éléments.

Un but de l'invention est de concevoir un nouveau type de système de détection qui puisse être notamment validé par une autre personne que celle qui a effectué la connexion, ce qui permet de donner à la connectique de raccordement toutes les garanties d'une bonne connexion du tuyau sur l'embout.

A cet effet, l'invention propose un système pour détecter l'état d'une connexion entre un embout tubulaire rigide et une connectique de raccordement d'une extrémité d'un tuyau sur cet embout, qui comprend au moins un détecteur sensible à la distance séparant un élément de l'embout et un élément de la connectique, le détecteur étant solidaire ou monté au voisinage de l'un ou de l'autre élément et pouvant prendre au moins deux états suivant que la connexion est bonne ou mauvaise, et qui comprend un dispositif électronique comprenant au moins un transpondeur à au moins deux états et dont l'état est commandé en fonction de l'état du détecteur de distance, une antenne reliée au transpondeur, et une base station pour interroger à distance l'état du transpondeur, **caractérisé en ce que** le détecteur de distance est un détecteur de contact connecté au transpondeur et qui est actionné lorsque l'élément de l'embout et l'élément de la connectique sont à au moins une distance minimale prédéterminée l'un de l'autre qui est susceptible de faire changer l'état du détecteur par un contact mécanique.

D'une manière générale, le transpondeur peut être du type « RFID » et apte à émettre par son antenne des signaux différents en fonction de son état.

Le transpondeur peut être collé contre l'élément de l'embout ou l'élément du corps de la connectique de raccordement, ou être moulé dans le corps de la connectique de raccordement, alors que l'antenne du transpondeur peut être logée ou moulée dans le corps de la connectique de raccordement, ou peut être montée sur la face avant ou arrière du corps de la connectique de raccordement.

En variante, le transpondeur peut être monté dans un joint rapporté contre l'élément de l'embout ou l'élément du corps de la connectique de raccordement, et l'antenne du transpondeur peut être moulée dans le joint, sachant que ledit joint peut être un joint à base d'un élastomère thermoplastique (TPE) par exemple et assurer également une fonction d'étanchéité.

Selon un premier mode de réalisation, le détecteur de distance est un détecteur de contact connecté au transpondeur et qui est actionné lorsque l'élément de l'embout et l'élément de la connectique de raccordement sont au moins à une distance minimale prédéterminée l'un de l'autre qui est susceptible de faire changer l'état du détecteur par un contact mécanique.

Selon un second mode de réalisation, le détecteur de distance est constitué de deux transpondeurs respectivement portés contre l'élément de l'embout et l'élément de la connectique de raccordement, l'un des transpondeurs réagissant à la distance séparant leurs deux antennes et étant interrogé par la base station.

A titre d'exemple, l'élément de l'embout est un bourrelet périphérique ou son extrémité libre engagée dans le corps de la connectique de raccordement, et l'élément du corps de la connectique de raccordement est une butée annulaire radialement interne du corps de la connectique.

D'une manière générale, l'opérateur qui a effectué la connexion a les moyens de contrôler si cette connexion est bonne ou mauvaise, mais ce contrôle ainsi que d'autres peuvent être effectués, après montage, d'une façon certaine au niveau d'un banc de contrôle général ou au niveau d'un contrôle technique chez un garagiste par exemple.

D'autres caractéristiques, avantages et détails de l'invention ressortiront du complément de description qui va suivre en référence à des dessins annexés, donnés uniquement à titre d'exemple et dans lesquels :
- la figure 1 est une vue en coupe schématique qui illustre une connectique de raccordement classique dans le contexte de l'invention;
- la figure 2 est une vue en coupe schématique pour illustrer un système de détection selon un premier mode de réalisation de l'invention, qui est monté dans la connectique de raccordement de la figure 1 ;
- les figures 2a à 2c sont des vues schématiques pour illustrer des variantes de réalisation du premier mode de réalisation de la figure 2 ;
- la figure 3 est une vue en coupe schématique pour illustrer un système de détection selon un second mode de réalisation de l'invention, qui est monté dans la connectique de raccordement de la figure 1 ; et
- la figure 4 est une vue en coupe d'une connectique de raccordement pour un tuyau de transport de carburant par exemple équipé d'un système de détection suivant l'invention.

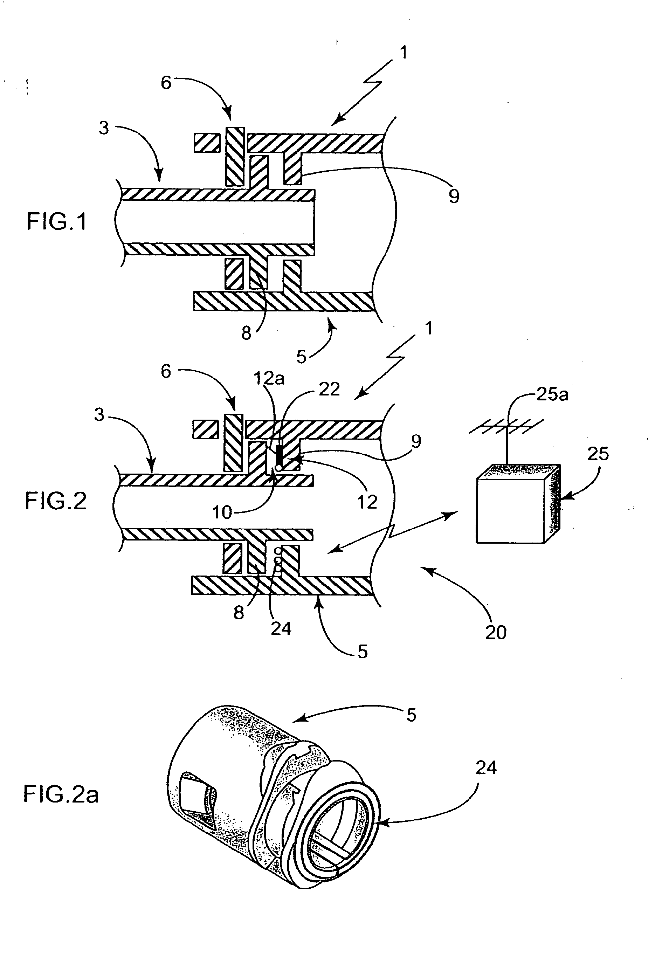

Une connectique de raccordement étanche classique 1 dans le contexte de l'invention est illustrée à la figure 1. Cette connectique 1 est utilisée pour raccorder d'une manière rapide une extrémité d'un tuyau (non représenté) sur un embout tubulaire rigide 3, et comprend notamment un corps tubulaire 5 qui reçoit une extrémité de l'embout 3, le verrouillage du corps tubulaire 5 sur l'embout 3 étant assuré par une agrafe 6 élastiquement déformable rapportée sur le corps 5. D'une manière connue, l'embout 3 présente au moins un bourrelet périphérique 8 sur sa longueur, et le corps 5 de la connectique présente au moins une butée annulaire radialement interne 9 en saillie à sa surface interne. D'une manière générale, les éléments précités sont positionnés et dimensionnés de manière à ce que le bourrelet 8 de l'embout 3 se retrouve entre l'agrafe 6 et la butée interne 9 pour qu'une bonne connexion soit établie entre l'embout 3 et le corps 5 de la connectique. Concrètement, un bruit est entendu lors du passage du bourrelet 9 de l'embout 3 devant l'agrafe 6.

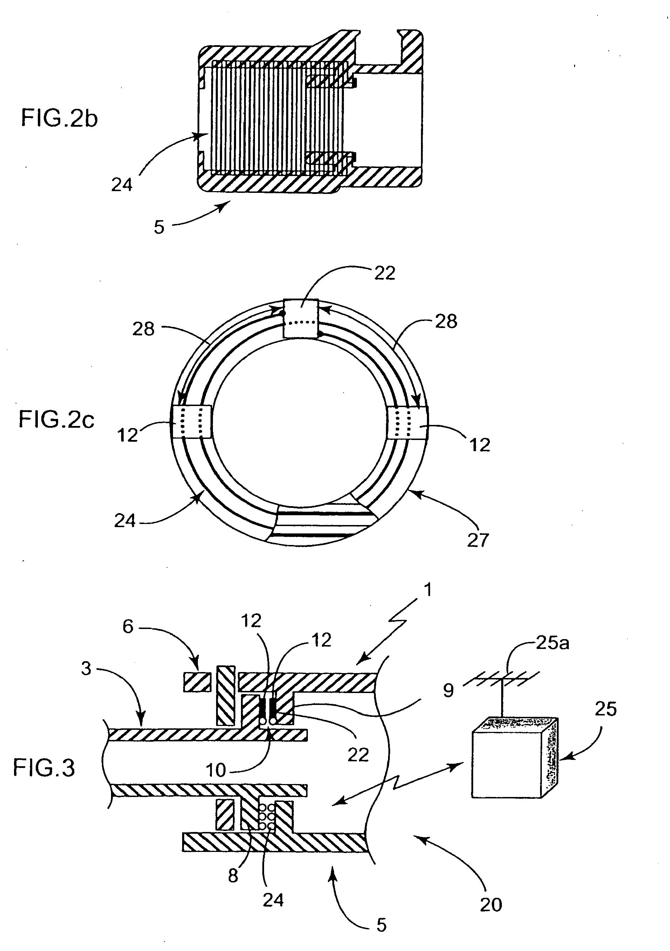

Un système de détection 10 d'une bonne connexion entre l'embout 3 et le corps 5 de la connectique va être décrit ci-après suivant deux modes de réalisation donnés à titre d'exemple et illustrés sur les figures 2 et 3. D'une manière générale, le système de détection 10 est basé sur l'utilisation d'au moins un détecteur 12 sensible à la distance séparant un élément de l'embout 3 et un élément de la connectique de raccordement 1, ce détecteur 12 pouvant prendre deux états suivant que la connexion est bonne ou mauvaise.

Selon le premier mode de réalisation illustré à la figure 2, l'état du détecteur 12 est fonction de la distance séparant le bourrelet 8 de l'embout 3 et la butée interne 9 du corps 5 de la connectique. Dans l'exemple illustré à la figure 2, le détecteur 12 est monté contre la butée interne 9 de manière à se trouver en regard du bourrelet 8, mais il pourrait tout aussi bien être monté contre le bourrelet 8 de l'embout 3, sa fixation étant assurée par collage par exemple. Plus précisément, le détecteur de distance 12 est constitué par au moins un interrupteur mécanique 12a qui peut prendre deux positions correspondant à une bonne connexion lorsque la distance séparant le bourrelet 8 et la butée interne 9 est telle que l'interrupteur 12a a pu être actionné pour changer d'état, ou à une mauvaise connexion lorsque la distance séparant le bourrelet 8 et la butée interne 9 est telle que l'interrupteur 12a n'a pu être actionné et n'a pas changé d'état. En variante, l'interrupteur mécanique 12a peut être un bouton-pressoir ou tout autre dispositif équivalent.

Le système de détection 10 comprend également un dispositif électronique 20 qui est relié au détecteur 12. Ce dispositif électronique 20 comprend un transpondeur 22 qui est du type « RFID » ("Radio Frequency IDentification" en langue anglaise, ou identification par radiofréquence en français) qui est relié au détecteur 12 et à une antenne 24, et une base station 25 située à distance avantageusement portative et qui communique à distance par une antenne 25a avec le transpondeur 22 par l'émission d'ondes radio-fréquences. L'antenne 24 peut former une boucle qui est par exemple collée contre la butée interne 9, c'est-à-dire que l'antenne 24 est logée dans le corps 5 de la connectique 1.

D'une manière générale, c'est la base station 25 qui alimente en énergie et active le transpondeur 22 pour connaître son état qui est déterminé par l'état du détecteur 12. Si la connexion est bonne, le transpondeur 22 répond à la base station 25 par l'émission d'un signal S1, et si la connexion est mauvaise le transpondeur 22 répond par l'émission d'un signal S2 différent du signal S1, par exemple. En variante, le transpondeur 22 pourrait ne pas répondre lorsque la connexion est mauvaise, mais cette non-réponse pourrait laisser supposer que le transpondeur 22 est éventuellement endommagé.

Concrètement, lorsqu'un opérateur établit la connexion entre l'embout 3 et la connectique de raccordement 1, cette connexion ne peut être assurée que lorsque le bourrelet 8 de l'embout 3 a passé l'agrafe 6, ce qui provoque un bruit qui n'est pas forcément perçu par l'opérateur suivant le bruit de fond qui est présent dans l'environnement extérieur. Pour valider cette connexion, l'opérateur saisit la base station 25 et interroge le transpondeur 22 pour connaître son état et s'assurer ainsi de la bonne connexion ou détecter une mauvaise connexion.

Par ailleurs, la validité de cette connexion peut être également assurée par un autre opérateur lorsque le véhicule passe, après montage, devant un équipement de maintenance par exemple qui est équipé d'une base station 25 et d'autres dispositifs pour vérifier d'autres paramètres du véhicule.

A partir du premier mode de réalisation illustré à la figure 2, on peut envisager des variantes de réalisation qui entrent dans le cadre de l'invention. En particulier, le transpondeur 22 peut être moulé dans le corps 5 de la connectique 1, mais ce sont surtout des dispositions de son antenne 24 qui peuvent être prévues pour augmenter ses dimensions et assurer un meilleur rayonnement. Sur la figure 2a, l'antenne 24 est collée et enroulée autour de la face avant ou arrière du corps 5 de la connectique 1 pour augmenter ses dimensions, l'antenne 24 se trouvant montée à l'extérieur du corps 5 de la connectique 1. Sur la figure 2b, l'antenne 24 est moulée dans le corps 5 de la connectique 1 pour augmenter également ses dimensions. Enfin, sur une variante de réalisation illustré à la figure 2c, le détecteur 12, le transpondeur 22 et son antenne 24 sont montés dans un joint 27 qui vient se monter par exemple en appui sur la butée 9 du corps 5 de la connectique 1. Selon cette variante, il y a deux détecteurs 12 qui sont reliés au transpondeur 22 par deux connexions 28, alors que l'antenne 24 peut faire une boucle de plusieurs tours. Ce joint 27 peut être réalisé en un matériau TPE par exemple et assurer également une fonction d'étanchéité.

Selon le second mode de réalisation illustré à la figure 3, deux détecteurs de distance 12 sont respectivement portés par le bourrelet de l'embout 8 et la butée interne 9 du corps 5 de la connectique, et sont chacun constitués par un transpondeur 22 de type « RFID » et une antenne 24. Si la connexion est bonne, la distance séparant les antennes 24 des transpondeurs est telle qu'il va pouvoir s'établir un couplage magnétique entre elles, par contre si la connexion est mauvaise les deux antennes 24 seront trop éloignées l'une de l'autre pour assurer ce couplage magnétique. Si un couplage magnétique est effectif, l'un des deux transpondeurs 22 va changer d'état et c'est l'état de ce transpondeur 22 qui va être interrogé par la base station 25.

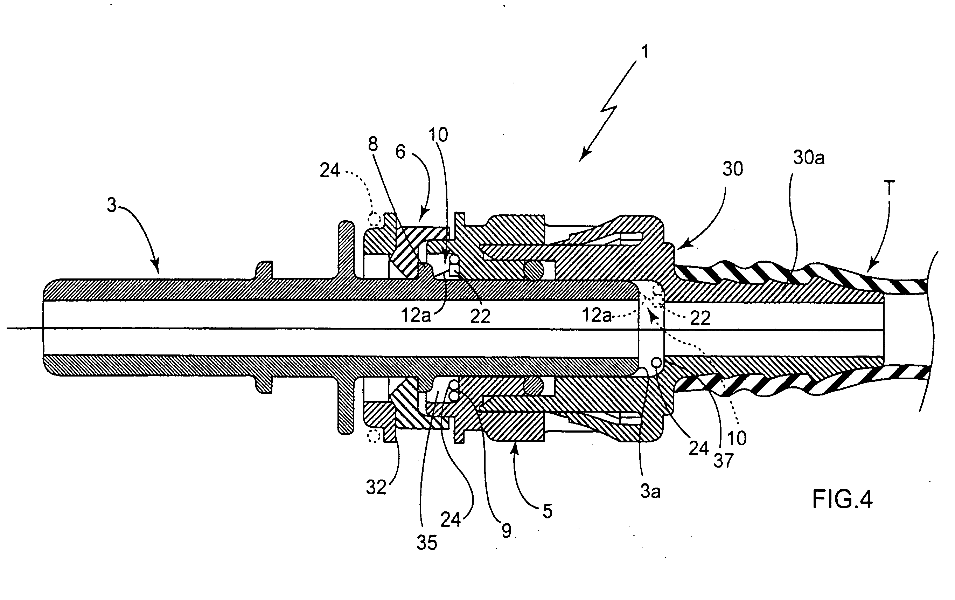

La figure 4 illustre concrètement un mode de réalisation de l'invention dans le cas d'une connectique de raccordement pour un tuyau transportant du carburant par exemple. La connectique 1 comprend un corps tubulaire 5 qui reçoit à une extrémité un embout rigide 30 terminé par une queue sapin 30a sur laquelle est engagée de manière étanche une extrémité d'un tuyau T. Vers son autre extrémité, le corps 5 présente un logement 32 dans lequel est montée une agrafe de verrouillage 6. La surface interne du corps tubulaire 5 présente un épaulement annulaire radialement interne 9 formant une butée, la distance séparant l'agrafe 6 et l'épaulement 9 délimitant un logement annulaire 35 apte à recevoir un bourrelet périphérique 8 de l'embout 3. Un système de détection 10 selon le premier mode de réalisation illustré sur la figure 2 est monté dans le logement 35 avec un interrupteur 12a relié à un transpondeur 22 « RFID » qui est par exemple collé contre l'épaulement 9. L'antenne 24 peut être enroulée sur l'épaulement 9 et être ainsi logée dans le corps 5 de la connectique 1, mais elle peut être située à l'extérieur du corps 5 en étant enroulée par exemple autour de la face avant ou arrière du corps 5 en regard de l'embout 3.

Dans les exemples précédemment décrits, le bourrelet 8 de l'embout 3 sert de référence pour le système de détection 10, mais une autre référence peut être choisie sur l'embout 3, par exemple sa surface d'extrémité 3a qui, lorsque la connexion est établie, vient en regard d'un épaulement annulaire interne 37 ménagé dans l'embout 30, comme cela est illustré sur la figure 4. Dans ce cas, le transpondeur 22 du système de détection 10 peut être monté contre cet épaulement 37 et l'interrupteur 12a peut être actionné par la surface d'extrémité 3a de l'embout 3 si la connexion est bonne.

Enfin, chaque transpondeur 22 peut inclure également un espace mémoire pour y loger des informations lisibles à partir de la base station 25, ces informations pouvant être des informations de maintenance ou logistique par exemple.

## Revendications

1. Système pour détecter l'état de la connexion entre un embout tubulaire rigide (3) et une connectique de raccordement (1) d'une extrémité d'un tuyau sur cet embout (3), ledit système comprenant au moins un détecteur (12) sensible à la distance séparant un élément (8) de l'embout (3) et un élément (9) du corps de la connectique (1), le détecteur (12) étant solidaire ou monté au voisinage de l'un ou de l'autre élément et pouvant prendre au moins deux états suivant que la connexion est bonne ou mauvaise, et un dispositif électronique (20) comprenant au moins un transpondeur (22) à au moins deux états et dont l'état est commandé en fonction de l'état du détecteur de distance (12), une antenne (24) reliée au transpondeur (22), et une base station (25) pour interroger à distance l'état du transpondeur (22), **caractérisé en ce que** le détecteur de distance (12) est un détecteur de contact (12a) connecté au transpondeur (22) et qui est actionné lorsque l'élément (8) de l'embout (3) et l'élément (9) de la connectique (1) sont à au moins une distance minimale prédéterminée l'un de l'autre qui est susceptible de faire changer l'état du détecteur (12) par un contact mécanique.

2. Système selon la revendication 1, dans lequel le transpondeur (22) est du type RFID et apte à émettre par son antenne (24) des signaux différents en fonction de son état.

3. Système selon la revendication 1 ou 2, dans lequel le transpondeur (22) est collé contre l'élément (8) de l'embout ou l'élément (9) du corps de la connectique de raccordement.

4. Système selon la revendication 1 ou 2, dans lequel le transpondeur (22) est moulé dans le corps de la connectique de raccordement (1).

5. Système selon l'une des revendications précédentes, dans lequel l'antenne (24) du transpondeur est logée dans le corps de la connectique de raccordement (1).

6. Système selon la revendication 5, dans lequel l'antenne (24) du transpondeur est moulée dans le corps de la connectique de raccordement (1).

7. Système selon l'une des revendications 1 à 4, dans lequel l'antenne (24) du transpondeur est montée sur la face avant ou arrière du corps de la connectique de raccordement (1).

8. Système selon la revendication 1 ou 2, dans lequel le transpondeur (22) est monté dans un joint rapporté contre l'élément (8) de l'embout ou l'élément (9) du corps de la connectique de raccordement (1).

9. Système selon la revendication 8, dans lequel l'antenne (24) du transpondeur est moulée dans le joint.

10. Système selon la revendication 8 ou 9, dans lequel le joint est un joint à base d'un élastomère thermoplastique (TPE) et assure également une fonction d'étanchéité.

11. Système selon l'une des revendications précédentes, dans lequel l'élément (9) de la connectique de raccordement (1) est une butée annulaire radialement interne (9) du corps (5) de la connectique.

12. Système selon l'une des revendications précédentes, dans lequel l'élément (8) de l'embout (3) est un bourrelet périphérique ou l'extrémité libre de l'embout (3) engagée dans le corps (5) de la connectique de raccordement.

## Claims

1. System for detecting the state of the connection between a rigid tubular endpiece (3) and a connector device (1) for attaching an end of a pipe to this endpiece (3), the system comprising at least one detector (12) sensitive to the distance between an element (8) of the endpiece (3) and an element (9) of the body of the connector device (1), the detector (12) being fixed to or mounted in the vicinity of one or of the other element and capable of assuming at least two states depending on whether the connection is good or bad, and an electronic device (20) comprising at least one transponder (22) with at least two states, the state of which is controlled as a function of the state of the distance detector (12), an aerial (24) connected to the transponder (22), and a base station (25) for remotely interrogating the state of the transponder (22), **characterised in that** the distance detector (12) is a contact detector (12a) connected to the transponder (22) and is actuated when the element (8) of the endpiece (3) and the element (9) of the connector device (1) are at least at a predetermined minimum distance from one another which is capable of changing the state of the detector (12) by mechanical contact.

2. System according to claim 1, wherein the transponder (22) is of the RFID type and is adapted to emit different signals through its aerial (24) as a function of its state.

3. System according to claim 1 or 2, wherein the transponder (22) is bonded to the element (8) of the endpiece or the element (9) of the body of the linking connector device (1).

4. System according to claim 1 or 2, wherein the transponder (22) is moulded in the body of the linking connector device (1).

5. System according to one of the preceding claims, wherein the aerial (24) of the transponder is housed in the body of the linking connector device (1).

6. System according to claim 5, wherein the aerial (24) of the transponder is moulded in the body of the linking connector device (1).

7. System according to one of claims 1 to 4, wherein the aerial (24) of the transponder is mounted on the front or back surface of the body of the linking connector device (1).

8. System according to claim 1 or 2, wherein the transponder (22) is mounted in a joint fitted against the element (8) of the endpiece or the element (9) of the body of the linking connector device (1).

9. System according to claim 8, wherein the aerial (24) of the transponder is moulded in the joint.

10. System according to claim 8 or 9, wherein the joint is a thermoplastic elastomer (TPE) based joint and also provides a sealing function.

11. System according to one of the preceding claims, wherein the element (9) of the linking connector device (1) is an annular abutment (9) radially inside the body (5) of the linking connector device.

12. System according to one of the preceding claims, wherein the element (8) of the endpiece (3) is a peripheral bead or the free end of the endpiece (3) engaging in the body (5) of the linking connector device.

## Patentansprüche

1. System zum Erfassen des Verbindungszustandes zwischen einem starren, rohrförmigen Ansatzstück (3) und einer Anschlussvorrichtung (1) eines Endabschnitts eines Rohrs an diesem Ansatzstück (3), wobei das System zumindest eine Erfassungseinrichtung (12), die für den Abstand empfindlich ist, der ein Element (8) des Ansatzstücks (3) und ein Element (9) des Körpers der Anschlussvorrichtung (1) trennt, wobei die Erfassungseinrichtung (12) fest verbunden mit dem einen oder anderen Element ist oder benachbart zu diesem montiert ist und in der Lage ist, zumindest zwei Zustände entsprechend einer guten oder schlechten Verbindung einzunehmen, und eine elektronische Vorrichtung (20) aufweist, die zumindest einen Transponder (22) mit zumindest zwei Zuständen, dessen Zustand in Abhängigkeit von dem Zustand der Abstandserfassungseinrichtung (12) gesteuert wird, eine Antenne (24), die mit dem Transponder (22) verbunden ist, und eine Basisstation (25) zum Abfragen des Zustandes des Transponders (22) aus der Distanz aufweist, **dadurch gekennzeichnet, dass** die Abstandserfassungseinrichtung (12) eine Kontakterfassungseinrichtung (12a) ist, die mit dem Transponder (22) verbunden ist und die betätigt wird, wenn das Element (8) des Ansatzstücks (3) und das Element (9) der Anschlussvorrichtung (1) zumindest in einem vorbestimmten Minimalabstand voneinander sind, der in der Lage ist, den Zustand der Erfassungseinrichtung (12) durch einen mechanischen Kontakt zu ändern.

2. System nach Anspruch 1, bei dem der Transponder (22) vom RFID-Typ ist und in der Lage ist, durch seine Antenne (24) unterschiedliche Signale in Abhängigkeit von seinem Zustand zu senden.

3. System nach Anspruch 1 oder 2, bei dem der Transponder (22) gegen das Element (8) des Ansatzstücks (3) oder das Element (9) des Körpers der Anschlussvorrichtung geklebt ist.

4. System nach Anspruch 1 oder 2, wobei der Transponder (22) in den Körper der Anschlussvorrichtung (1) geformt bzw. gegossen ist.

5. System nach einem der vorhergehenden Ansprüche, wobei die Antrenne (24) des Transponders in dem Körper der Anschlussvorrichtung (1) untergebracht ist.

6. System nach Anspruch 5, wobei die Antenne (24) des Transponders in den Körper der Anschlussvorrichtung (1) geformt bzw. gegossen ist.

7. System nach einem der Ansprüche 1 bis 4, wobei die Antenne des Transponders (24) an der Vorder- oder Hinterfläche des Körpers der Anschlussvorrichtung (1) montiert ist.

8. System nach Anspruch 1 oder 2, wobei der Transponder (22) in einer Dichtung montiert ist, die gegen das Element (8) des Ansatzstücks oder das Element (9) des Körpers der Anschlussvorrichtung (1) angebracht ist.

9. System nach Anspruch 8, wobei die Antenne (24) des Transponders in die Dichtung geformt bzw. gegossen ist.

10. System nach Anspruch 8 oder 9, wobei die Dichtung eine Dichtung auf der Grundlage eines thermoplastischen Elastomers (TPE) ist und ebenfalls eine Dichtungsfunktion absichert.

11. System nach einem der vorhergehenden Ansprüche, wobei das Element (9) der Anschlussvorrichtung (1) ein ringförmiger, radial innerer Anschlag (9) des Körpers (5) der Anschlussvorrichtung ist.

12. System nach einem der vorhergehenden Ansprüche, wobei das Element (8) des Ansatzstücks (3) eine Umfangswulst oder der freie Endabschnitt des Ansatzstücks (3), der mit dem Körper (5) der Anschlussvorrichtung in Eingriff steht, ist.
